# NOUVEAU FASCICULE DE BREVET EUROPEEN

(11) **EP 0 185 830 B2**
(45) Date de publication et mention de la décision concernant l'opposition: **20.01.1993**
(45) Mention de la délivrance du brevet: 02.11.1988
(21) Numéro de dépôt: 84402749.0
(22) Date de dépôt: 28.12.1984
(51) Int. Cl.: H01M 4/24, H01M 4/20

(54) **Electrode plastifiée de cadmium**
Plastisch gebundene Kadmiumelektrode
Plastic-bonded cadmium electrode

(43) Date de publication de la demande: 02.07.1986
(73) Titulaire: SORAPEC Société de Recherche et d'Applications Electrochimiques, F-94120 Fontenay-sous-Bois (FR)
(72) Inventeur: Doniat, Denis, F-94170 Le Perreux (FR); Bugnet, Bernard, F-77420 Champs sur Marne (FR)
(74) Mandataire: Thibon-Littaye, Annick

(56) Documents cités:
- DD-A- 210 586
- FR-A- 1 087 590
- FR-A- 2 296 276
- FR-A- 2 548 459
- GB-A- 1 481 543
- US-A- 4 177 157
- US-A- 4 251 603
- PATENTS ABSTRACTS OF JAPAN, volume 8, no. 209, (E-268)(1646) 22 septembre 1984, & JP - A - 59-94373 (SANYO DENKI K.K.) 31-05-84
- P
- PATENTS ABSTRACTS OF JAPAN, volume 4, no. 87, (E-16)(569) 21 juin 1980, & JP - A - 55-53874 (FURAKAWA DENCHI K.K.) 19-04-1980
- PATENTS ABSTRACTS OF JAPAN, volume 7, no. 166, (E-188)(1311) 21 juillet 1983, & JP - A - 58-73962 (SHINKOUBE DENKI K.K.) 04-05-1983
- CHEMICAL ABSTRACTS, volume 92, no. 2, janvier 1980, page 140, abrégé 8885n, Columbus, Ohio, US
- PATENTS ABSTRACTS OF JAPAN, volume 4, no. 145, (E-29)(627) 14 octobre 1980, & JP - A - 55-95269 (NIPPON DENCHI K.K.) 19-07-1980
- CHEMICAL ABSTRACTS, volume 94, no. 6, 9 février 1981, page 191, abrégé 33706d, Columbus, Ohio, US
- PATENTS ABSTRACTS OF JAPAN, volume 8, no. 200, (E-266)(1637) 13 septembre 1984, & JP - A - 59-90358 (NIHON DENCHI K.K.) 24-05-1984
- PATENTS ABSTRACTS OF JAPAN, volume 7, no. 182, (E-192)(1327) 11 août 1983, & JP - A - 58-87765 (MATSUSHITA DENKI SANGYO K.K.) 25-05-1983
- PATENTS ABSTRACTS OF JAPAN, volume 6, no. 182,(E-131)(1060) 18 septembre 1982, & JP - A - 57-96463 (MATSUSHITA DENKI SANGYO K.K.) 15-06-1982

## Description

La présente invention concerne les électrodes pour générateurs électrochimiques.

Elle s'attache plus particulièrement à la réalisation d'une électrode (à oxyde) de cadmium pour accumulateur.

Les voies les plus diverses ont été explorées depuis de nombreuses années afin de parvenir à la réalisation d'électrodes aux performances améliorées. Dans ce domaine les axes de recherche se sont principalement orientés dans le sens d'un allégement des collecteurs, d'une amélioration de la rétention des matières actives, et d'un accroissement de leur rendement électrochimique par l'établissement d'une meilleure collecte des charges. L'utilisation de collecteurs poreux a ainsi permis de réaliser de sensibles progrès par rapport aux techniques antérieures: par la mise en oeuvre de structures métalliques frittées dans un premier temps, puis plus récemment à travers l'obtention et l'emploi de structures métallisées fibreuses ou réticulées, dont la porosité, à travers tout leur volume, peut atteindre et dépasser 90 %.

L'invention qui fait l'objet du présent brevet concerne un procédé de réalisation d'une électrode de cadmium dont le collecteur est une structure métallique à forte porosité.

Le substrat métallique préférentiellement utilisé afin de constituer à la fois le collecteur des charges et la matrice de rétention de la matière active, est une structure réticulée, alvéolaire, formant une juxtaposition d'espaces cellulaires, et dont la porosité, totalement ouverte, est supérieure à 95 %.

Cette "mousse métallique" est avantageusement constituée, au moins superficiellement, de nickel. Cette structure étant généralement obtenue par dépôt(s) métalliques(s) réalisé(s) surune mousse de po- lyéther ou polyester, l'épaisseur de ce ou ces dépôts est avantageusement de l'ordre de 5 à 20 wm. Le diamètre moyen des pores est de préférence situé entre 0,3 mm et 1 mm et plus particulièrement aux environs de 0,7 à 0,8 mm. Quant à l'épaisseur de ce substrat, elle est choisie en fonction de l'utilisation qui sera faite de l'électrode de cadmium réalisée. Elle diffère selon que celle-ci est destinée notamment, à être spiralée ou non ou a être incorporée dans des accumulateurs de petites ou grandes dimensions; elle peut également être déterminée en considération des conditions de fonctionnement et des performances électrochimiques désirées. Elle sera le plus souvent comprise entre 0,5 et 3 mm et préférentiellement entre 1 et 2 mm.

Un collecteur tel que défini précédemment, de 2 mm d'épaisseur, a une masse d'environ 50 mg par centimètre carré de surface apparente; le rapport entre surface réelle et surface apparente se situe à environ 5.

La matière active de l'électrode, oxyde de cadmium, est introduite à l'intérieur du collecteur- qui assure également la formation de matrice de rétention - sous la forme de pâte.

Cette pâte est obtenue par association de la matière active proprement dite et d'un agent plastifiant avec adjonction éventuelle d'un agent de consistance.

Selon l'invention il convient d'adjoindre à l'oxyde de cadmium un agent plastifiant qui est du PTFE polytétrafluoréthylène). Celui-ci est introduit avantageusement sous la forme d'une suspension aqueuse d'une concentration de 60 % environ. La part de PTFE, par rapport à l'oxyde de cadmium est de préférence comprise entre 2 et 4 % en poids, la valeur de 3 % pouvant être plus généralement retenue. Un diluant alcoolique est ensuite ajouté au mélange; il peut s'agir par exemple d'éthanol, qui peut être de qualité dénaturée. Le rapportoptimal, lors de la réalisation de la pâte, entre l'alcool et l'oxyde de cadmium, se situe aux environs de 80 ml d'alcool pour 100 g de CdO. La présence du PTFE, qui donne à l'électrode une fois obtenue le caractère dit d"'électrode plastifiée", a pour effet de provoquer au sein de la masse active une fibrilisation qui lui confère des caractéristiques de tenue mécanique améliorée, ce liant réduisant la fragilité et la friabilité de l'ensemble qui acquiert une certaine souplesse.

Il est enfin utile pour une mise en place aisée de la masse active à l'intérieur de la matrice collectrice réticulée, d'introduire au cours de la préparation du mélange, un agent de consistance, dont le rôle consiste à obtenir pour la pâte une onctuosité propre à répondre aux conditions de l'opération d'empâtage. Cet agent de consistance est préférentiellement de la méthyl-cellulose qu'il convient avantageusement d'introduire dans la masse active à raison d'environ 1 % en poids par rapport à l'oxyde de cadmium.

L'empâtage de la structure métallique réticulée est ensuite effectué, manuellement ou au moyen d'un dispositif industriel. Selon l'épaisseur du support et la dimension de ses pores, l'empâtage est préférentiellement réalisé en un ou deux passages. En cas d'em- pâtage en deux passages il estavantageuxd'introduire une première fois la pâte par l'une des faces, puis lors du second passage par l'autre face.

Pour une réalisation optimale de l'électrode selon l'invention il est utile de procéder, à la suite de l'em- pâtage, à certaines opérations complémentaires.

Il est avantageux, immédiatement après empâta- ge d'effectuer sur l'électrode un calandrage sous faible pression, par exemple au moyen de rouleaux caoutchoutés.

Un séchage est conseillé afin d'éliminer l'eau et l'alcool contenus dans la masse active. Il convient d'éviter que ce séchage ne soit effectué de façon trop brutale ce qui risquerait de provoquer un craquelle- ment de la masse. Ce soucis conduit à réaliser cette étape de séchage à basse température, de préférence non supérieure à 100 °C.

Il est particulièrement avantageux, selon la présente invention, d'effectuer ensuite une opération de "dopage" de l'électrode. Ce dopage au nickel est obtenu par immersion de l'électrode dans une solution de nitrate de nickel, dont la concentration optimale se situe aux environs de 50 g/litre. Le temps d'immersion est préférentiellement d'environ une minute, temps durant lequel s'opère l'imprégration de l'électrode.

L'objet du dopage est de conférer à l'électrode de cadmium réalisée selon l'invention une meilleure tenue électrochimique en cyclage. En effet, dans le cas ou l'on ne réalise pas cette opération, on peut constater, après quelques dizaines de cyclages, une dérive de l'électrode, dont la capacité diminue alors progressivement. Lorsque l'électrode a été soumise à dopage au nickel, elle peut supporter plusieurs milliers de cycles de charge-décharge sans dégradation de sa capacité.

Après cette étape du processus de réalisation il est utile d'effectuer un second séchage, dans des conditions analogues à celles qui ont déjà été indiquées plus haut pour le premier séchage.

Enfin il est avantageux, selon l'invention, de procéder en dernier lieu à un compactage de l'électrode. Celui-ci a une double raison d'être. D'une part, en permettant de réduire l'épaisseur de l'électrode, il conduit, par une simple opération mécanique, a en augmenter la capacité ohmique. D'autre part il assure une consolidation de l'électrode qui acquiert une meilleure tenue mécanique. Ce compactage est préférentiellement effectué sous une pression d'environ 200 kg/cm² de surface apparente, ce qui conduit à réduire l'épaisseur de l'électrode de moitié.

Une électrode de cadmium réalisée selon l'invention, et ayant fait l'objet d'un processus de préparation incluant l'ensemble des étapes définies ci-dessus offre une capacité volumique d'environ 700 Ah/litre et une capacité massique d'environ 250 Ah/kg. Une électrode de ce type ne présente aucune perte de capacité après 1000 cycles de charge-décharge en C/2 à une profondeur de décharge de 80 %.

## Revendications

1. Procédé de réalisation d'une électrode de cadmium, suivant lequel on imprègne un support poreux constitué par une mousse métallique au moyen d'une pâte comportant une matière active, et dans lequel la mousse métallique présente une structure réticulée à porosité totalement ouverte supérieure à 95 %, avec un diamètre moyen de pores compris entre 0,3 mm et 1 mm, ladite matière active est de l'oxyde de cadmium dans lequel on introduit un agent plastifiant constitué par du polytétrafluoréthylène, de manière à provoquer au sein de la masse active une fibrilisation, le polytétrafluoréthylène étant présent dans ladite pâte dans une proportion de 2 à 4 % en poids par rapport à l'oxyde de cadmium et l'imprégnation est réalisée par remplissage des pores de la mousse métallique dans toute son épaisseur au moyen de ladite pâte.

2. Procédé selon la revendication 1, caractérisé en ce que la structure réticulée est constituée au moins superficiellement de nickel.

3. Procédé selon la revendication 1 ou 2, caractérisé en ce que la structure réticulée est d'une épaisseur comprise entre 0,5 et 3 mm.

4. Procédé selon la revendication 3, caractérisé en ce que la structure réticulée est d'une épaisseur comprise entre 1 et 2 mm, le diamètre moyen de ses pores étant de l'ordre de 0,7 à 0,8 mm.

5. Procédé selon l'une quelconque des revendications 1 à 4, caractérisé en ce que le polytétrafluoréthylène est introduit dans ladite pâte sous forme d'une suspension aqueuse d'une concentration de 60 % environ et en ce que ladite pâte contient un alcool en tant que diluant.

6. Procédé selon la revendication 5, caractérisé en ce que l'alcool est de l'éthanol introduit dans la pâte à raison de 80 ml pour 100 g d'oxyde de cadmium.

7. Procédé selon l'une quelconque des revendications 1 à 6, caractérisé en ce que ladite pâte comprend de la méthyl-cellulose.

8. Procédé selon l'une quelconque des revendications 1 à 7, caractérisé en ce que, une fois réalisé l'empâtage de la matrice collectrice réticulée, l'électrode est soumise à un calandrage puis à un séchage.

9. Procédé selon la revendication 8, caractérisé en ce qu'il comporte ensuite une opération de dopage au nickel de la matière active, par imprégnation de l'électrode dans une solution de nitrate de nickel suivie d'un séchage de l'électrode.

10. Procédé selon l'une quelconque des revendications 1 à 9, caractérisé en ce qu'il comporte en outre un compactage réduisant l'épaisseur de l'électrode.

## Patentansprüche

1. Verfahren zur Herstellung einer Cadmium-Elektrode, in dessen Verlauf man ein aus einem Metallschaum bestehendes poröses Trägerteil mittels einer Paste imprägniert, die aus einem aktiven Material besteht und bei dem der Metallschaum eine Netzstruktur mit einer total offenen Porosität von mehr als 95% aufweist, mit einem mittleren Porendurchmesser zwischen 0,3 und 1 mm, wobei das aktive Material Cadmiumoxid ist, in das man ein plastifizierendes Agens, bestehend aus Polytetrafluorethylen, einführt, so daß mitten in der aktiven Masse eine Fibrillierung hervorgerufen wird, wobei das Polytetrafluorethylen in der besagten Paste zu einem Anteil von 2 bis 4 Gewichtsprozent, gemessen am Cadmiumoxid, vorhanden ist und die Imprägnierung durch Ausfüllen der Poren des Metallschaumes in seiner ganzen Dicke mit der besagten Paste vorgenommen wird.

2. Verfahren nach Anspruch 1, dadurch gekennzeichnet, daß die Netzstruktur wenigstens an der Oberfläche aus Nickel besteht.

3. Verfahren nach Anspruch 1 oder 2, dadurch gekennzeichnet, daß die Netzstruktur eine Dicke zwischen 0,5 bis 3 mm hat.

4. Verfahren nach Anspruch 3, dadurch gekennzeichnet, daß die Dicke der Netzstruktur zwischen 1 und 2 mm und der mittlere Porendurchmesser zwischen 0,7 bis 0,8 mm beträgt.

5. Verfahren nach einem der Ansprüche 1 bis 4, dadurch gekennzeichnet, daß das Polytetrafluoräthylen in Form einer wässrigen Suspension mit einer Konzentration von etwa 60 % in die besagte Paste eingeführt wird und daß die Paste einen Alkohol als Verdünner enthält.

6. Verfahren nach Anspruch 5, dadurch gekennzeichnet, daß der Alkohol Äthanol ist, der in der Paste in einem Anteil von 80 ml auf 100 g Cadmiumoxid eingesetrt wird.

7. Verfahren nach einem der Ansprüche 1 bis 6, dadurch gekennzeichnet, daß die Paste Methylzellulose enthält.

8. Verfahren nach einem der Ansprüche 1 bis 7, dadurch gekennzeichnet, daß nach der Imprägnierung des Netzstruktur-Sammlerträgerteils die Elektrode geglättet (kalandriert) und dann getrocknet wird.

9. Verfahren nach 8, dadurch gekennzeichnet, daß das Verfahren auch noch eine Einführung (Doping) von Nickel in das aktive Material umfaßt, indem die Elektrode in einer Nickelnitratlösung imprägniert und dann getrocknet wird.

10. Verfahren nach einem der Ansprüche 1 bis 9, dadurch gekennzeichnet, daß das Verfahren außerdem noch ein Kompaktieren der Elektrode umfaßt, durch die die Dicke der Elektrode verringert wird.

## Claims

1. Method of fabrication of a cadmium electrode in which a porous support constituted by a metallic foam is impregnated with a paste containing an active substance and in which the metallic foam has a cross-linked structure having a totally open porosity which is higher than 95% with a mean pore diameter within the range of 0,3 mm to 1 mm, said active substance is cadmium oxide into which there is introduced a plasticizing agent constituted by polytetrafluoroethylene so as to cause fibrilization within the active substance, the polytetrafluoroethylene is present in said paste in a proportion of 2 to 4% by weight with respect to the cadmium oxide and the impregnation is carried out by filling the pores of the metallic foam throughout its entire thickness by means of said paste.

2. Method in accordance with claim 1, characterized in that the cross-linked structure is constituted by nickel at least at the surface.

3. Method in accordance with claim 1 or claim 2, characterized in that the cross-linked structure has a thickness within the range of 0.5 to 3 mm.

4. Method in accordance with claim 3, characterized in that the cross-linked structure has a thickness within the range of 1 to 2 mm, the mean diameter of its pores being of the order of 0.7 to 0.8 mm.

5. Method in accordance with any one of claims 1 to 4, characterized in that polytetrafluoroethylene is introduced into said paste in the form of an aqueous suspension having a concentration of approximately 60 % and that said paste contains an alcohol as diluent.

6. Method in accordance with claim 5, characterized in that the alcohol is ethanol introduced into the paste in a proportion of 80 ml per 100 g of cadmium oxide.

7. Method in accordance with any one of claims 1 to 6, characterized in that said paste contains methylcellulose.

8. Method in accordance with any one of claims 1 to 7, characterized in that, once the cross- linked collecting matrix has been impregnated with paste, the electrode is subjected to calendering, then to drying.

9. Method in accordance with claim 8, characterized in that it then comprises an operation which consists in doping the active substance with nickel by impregnating the electrode with a nickel nitrate solution followed by drying of the electrode.

10. Method in accordance with any one of claims 1 to 9, characterized in that it further comprises compacting for reducing the thickness of the electrode.
